# EUROPEAN PATENT SPECIFICATION

(11) **EP 2 332 812 B1**
(45) Date of publication and mention of the grant of the patent: **18.01.2012**
(21) Application number: 10177022.0
(22) Date of filing: 16.09.2010
(51) Int. Cl.: B62J 17/02, B62J 6/02

(54) **Headlamp supporting structure for saddle type vehicle**
Scheinwerferhaltevorrichtung für ein Sattelfahrzeug
Structure de support de phare pour véhicule de type à enfourcher

(30) Priority: 26.11.2009 JP 2009268780
(43) Date of publication of application: 15.06.2011
(73) Proprietor: Honda Motor Co., Ltd., Tokyo 107-8556 (JP)
(72) Inventor: Ochiai, Kazuyuki c/o Honda R&D Co., Ltd., Saitama (JP); Komuro, Nobuaki c/o Honda R&D Co., Ltd., Saitama (JP); Ashihara, Eiji c/o Forum Engineering Inc., Saitama (JP)
(74) Representative: Rupp, Christian

(56) References cited:
- EP-A2- 0 869 052
- JP-A- 2004 210 227
- US-A1- 2009 237 948

## Description

The present invention relates to a headlamp supporting structure for a saddle type vehicle such as a motorcycle. JP-A-2004 21 02 27 discloses a headlamp supporting structure according to the preamble of claim 1.

Conventionally, a structure is available wherein a projection is provided integrally at a rear portion of a housing of a headlamp and engaging the projection with a cowl stay to support the rear portion of the housing on the cowl stay and the housing is supported at an outer periphery thereof by a front cowl itself (for example, refer to Patent Document 1).

[Patent Document 1]
Japanese Patent JP-A-2004210227

Incidentally, in the structure described above, a combination of a lamp housing and a supporting frame is a design for exclusive use and, where the projection is not provided at a rear portion of the headlamp when a new design appearance is created while diverting an existing headlamp, it is necessary to newly provide the projection in a projecting manner. Therefore, significant change is required and also the supporting frame must be changed significantly, resulting in a subject that the cost is liable to become high.

Therefore, it is an object of the present invention to reduce, in a headlamp supporting structure for a saddle type vehicle wherein a headlamp is supported on a front cowl and a cowl stay, the degree of change of a headlamp and a supporting structure for the headlamp also upon change of the headlamp to implement reduction of the cost.

As means for solving the subject described above, according to the invention as set forth in claim 1, a headlamp supporting structure for a saddle type vehicle in which a front cowl (34) is mounted on a cowl stay (51) and a headlamp (35) is supported on the front cowl (34) and the cowl stay (51) is characterized in that
an outer periphery of the headlamp (35) is mounted on the front cowl (34) and a stopper bracket (72) is mounted at a lower portion of the headlamp (35), and an elastic body (64) fitted with the stopper bracket (72) is mounted on the cowl stay (51) and the headlamp (35) is elastically supported at the lower portion thereof by the cowl stay (51) through the elastic body (64).
It is to be noted that the saddle type vehicle is a concept including a vehicle in general on which a driver rides astride a vehicle body and is a concept not only including a motorcycle (including a bicycle with a prime mover and a scooter type vehicle) but also including a three-wheel vehicle (not only including a vehicle having one front wheel and two rear wheels but also including a vehicle having two front wheels and one rear wheel) or a four-wheel vehicle.
According to the invention as set forth in claim 2, the headlamp supporting structure for a saddle type vehicle is characterized in that the stopper bracket (72) is formed in a substantially L shape as viewed in side elevation and the stopper bracket (72) is provided so as to extend along an angular portion on the lower side of a rear portion of a lamp case (66) of the headlamp (35).
According to the invention as set forth in claim 3, the headlamp supporting structure for a saddle type vehicle is characterized in that the stopper bracket (72) is mounted at an upper portion thereof on a lamp case (66) of the headlamp (35), and an opening (74a) for engaging with the elastic body (64) is provided at a lower portion of the stopper bracket (72).
According to the invention as set forth in claim 4, the headlamp supporting structure for a saddle type vehicle is characterized in that a pair of such left and right headlamps (35) are provided, and the stopper bracket (72) is mounted at a lower portion on the inner side in a vehicle widthwise direction of the lamp case (66) of the left and right headlamps (35a, 35b).
According to the invention as set forth in claim 5, the headlamp supporting structure for a saddle type vehicle is characterized in that a pair of left and right mounting holes (73a) of the headlamp (35) on the lamp case (66) are provided on the stopper bracket (72), and a concave portion (77) of a substantially U shape is provided above the left and right mounting holes (73a) and an aiming bolt (81) is disposed above the concave portion (77).
According to the invention as set forth in claim 6, the headlamp supporting structure for a saddle type vehicle is characterized in that a detent (78) for engaging with the inner side of the concave portion (77) is provided on the lamp case (66).
According to the invention as set forth in claim 7, the headlamp supporting structure for a saddle type vehicle is characterized in that a cross pipe (54) extending a leftward and rightward direction is provided at a lower portion of the cowl stay (51), and the elastic body (64) is supported on a stay (55) extending forwardly from the cross pipe (54).
According to the invention as set forth in claim 8, the headlamp supporting structure for a saddle type vehicle is characterized in that a vacuum tank (91) communicating with a negative pressure chamber of a negative pressure type diaphragm for opening and closing an air intake path of an air cleaner case (25) of an engine (17) is provided between the left and right headlamps (35a, 35b) and in the proximity of the cross pipe (54).

With the invention according to claim 1, since the headlamp can be supported only by attaching the stopper bracket to an existing headlamp even if the supporting projection by a cowl stay is not provided on the headlamp, also upon change of the headlamp, the headlamp and the cowl stay can be diverted only by minor change thereof and reduction of the cost can be implemented.
With the invention according to claim 2, positioning of the stopper bracket is facilitated and the stopper bracket can be fixed stably in a state wherein the stopper bracket contacts with the rear face and the lower face of the lamp case.
With the invention according to claim 3, the elastic body can be fitted with the stopper bracket such that the lamp case is placed on the elastic body, and positioning and attachment and detachment of the headlamp can be carried out easily.
With the invention according to claim 4, the paired left and right headlamps can be supported stably with good balance.
With the invention according to claim 5, the aiming bolt normally disposed at a corner portion of the rear portion of the lamp case is avoided by the concave portion and the concave portion is utilized for engagement with a detent for the stopper bracket, and the stopper bracket can be attached to the lower side of the rear portion of the lamp case.
With the invention according to claim 6, attachment of the stopper bracket is facilitated and interference with the aiming bolt can be prevented.
With the invention according to claim 7, simplification of the supporting structure of the headlamp can be implemented.
With the invention according to claim 8, a dead space between the left and right headlamps can be utilized effectively as a disposition space for the vacuum tank and the degree of freedom in disposition of peripheral parts can be increased.

### [FIG. 1]

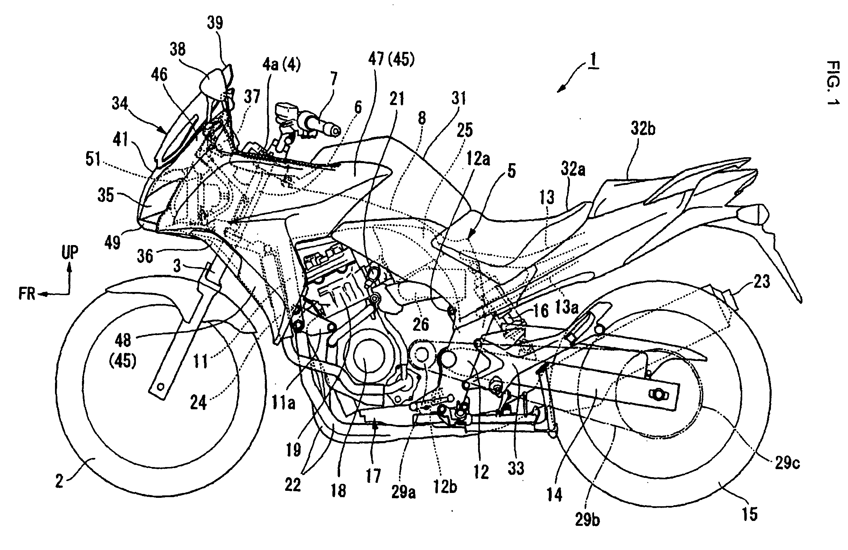

FIG. 1 is a left side elevational view of a motorcycle according to an embodiment of the present invention.

### [FIG. 2]

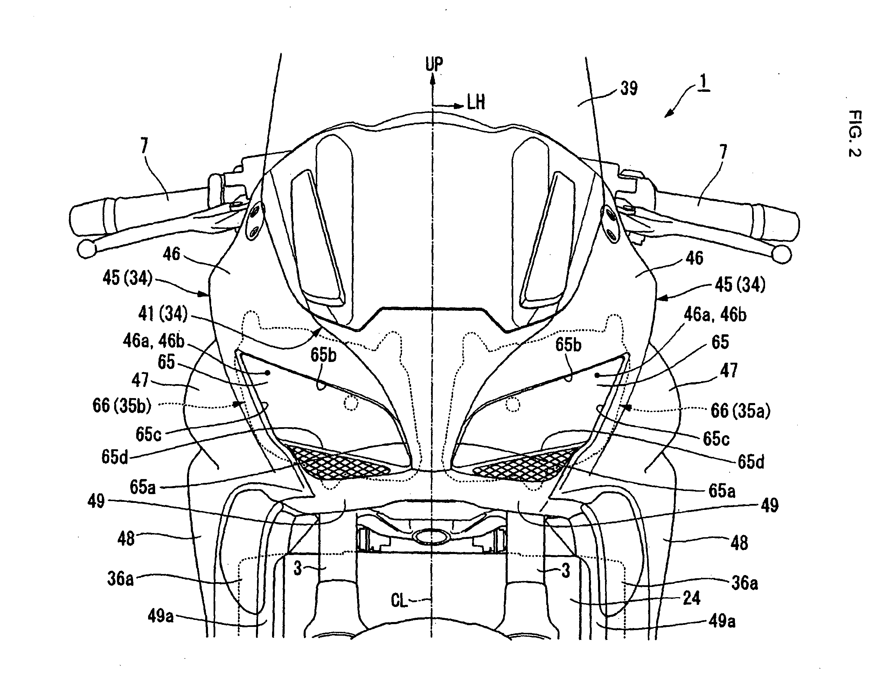

FIG. 2 is a front elevational view around a front cowl of the motorcycle.

### [FIG. 3]

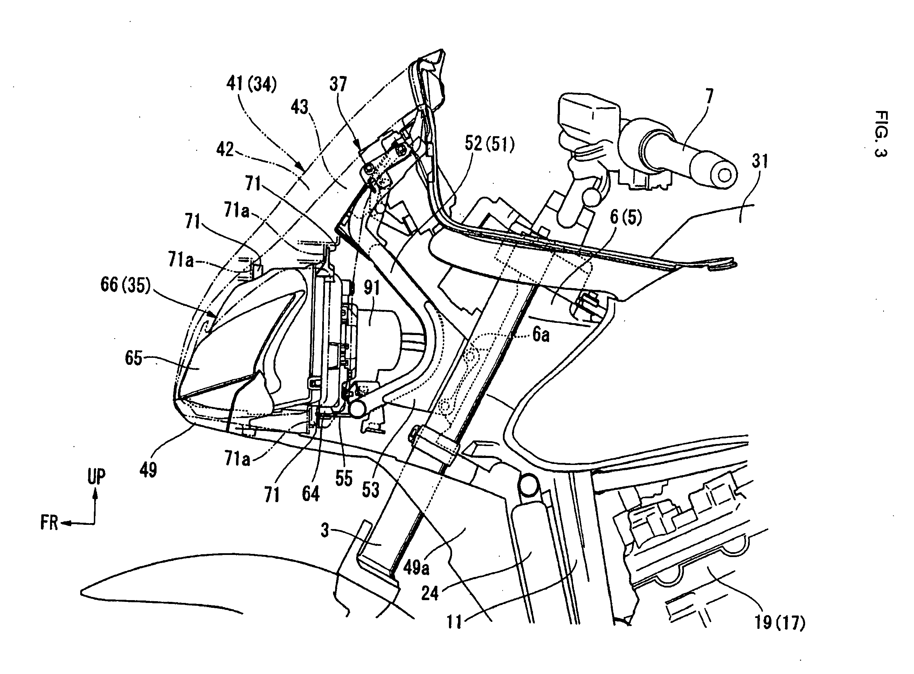

FIG. 3 is a left side elevational view around a headlamp in a state wherein the front cowl of the motorcycle and so forth are removed.

### [FIG. 4]

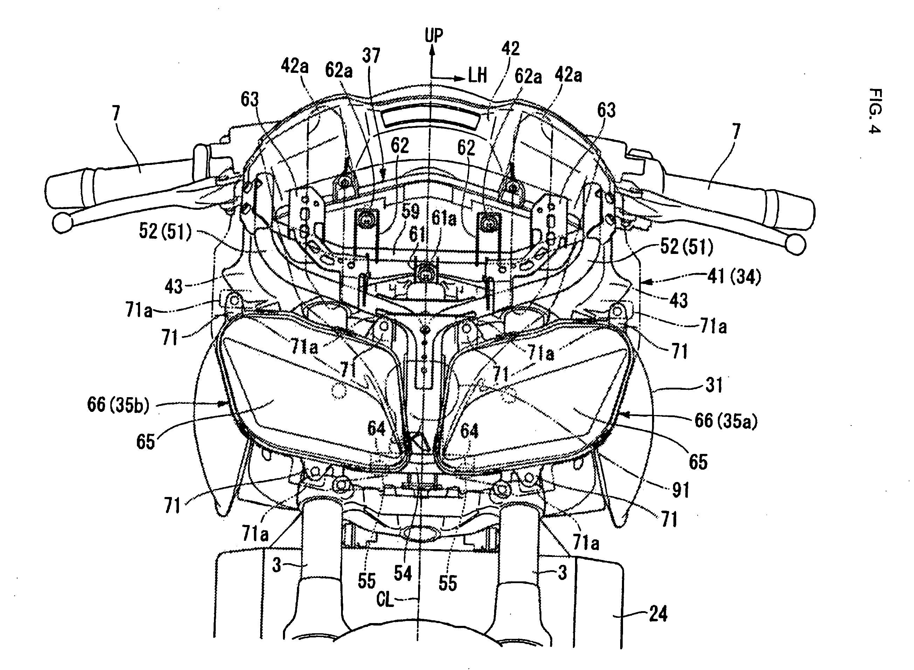

FIG. 4 is a front elevational view around the headlamp in the state wherein the front cowl of the motorcycle and so forth are removed.

### [FIG. 5]

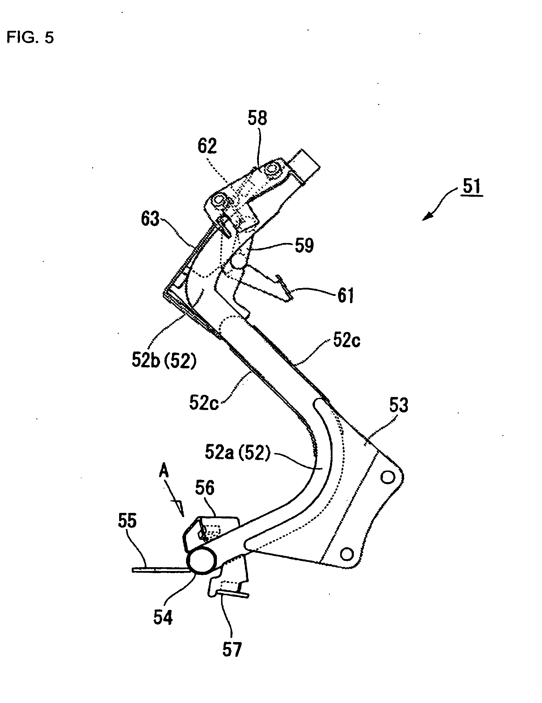

FIG. 5 is a left side elevational view of a cowl stay for supporting the front cowl, headlamp and so forth.

### [FIG. 6]

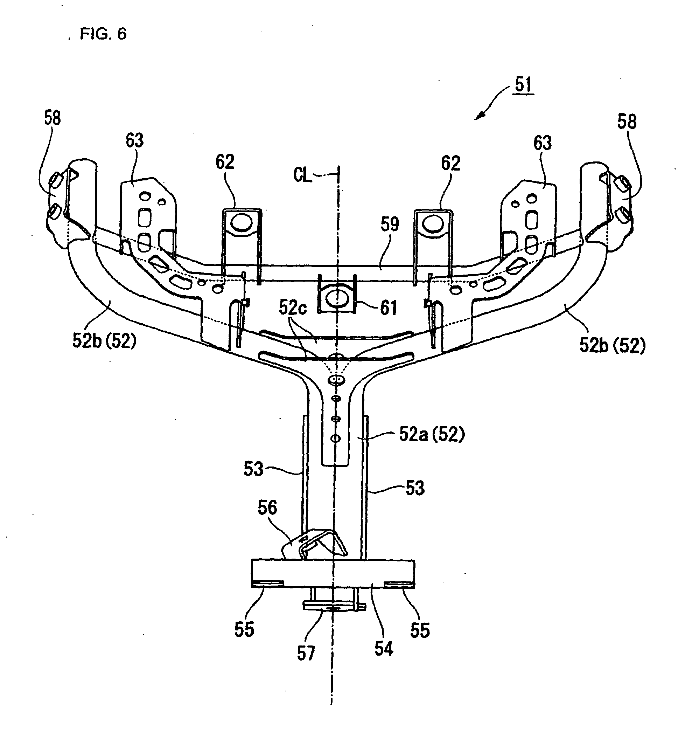

FIG. 6 is a front elevational view of the cowl stay.

### [FIG. 7]

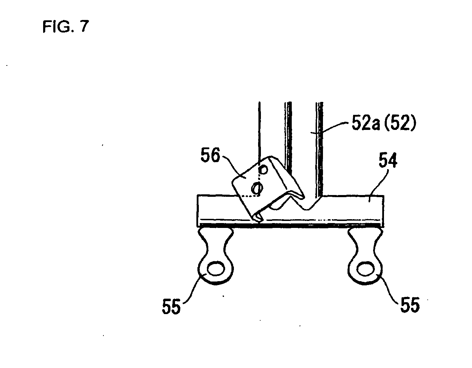

FIG. 7 is a view of the cowl stay as viewed in a direction indicated by an arrow mark A in FIG. 5.

### [FIG. 8]

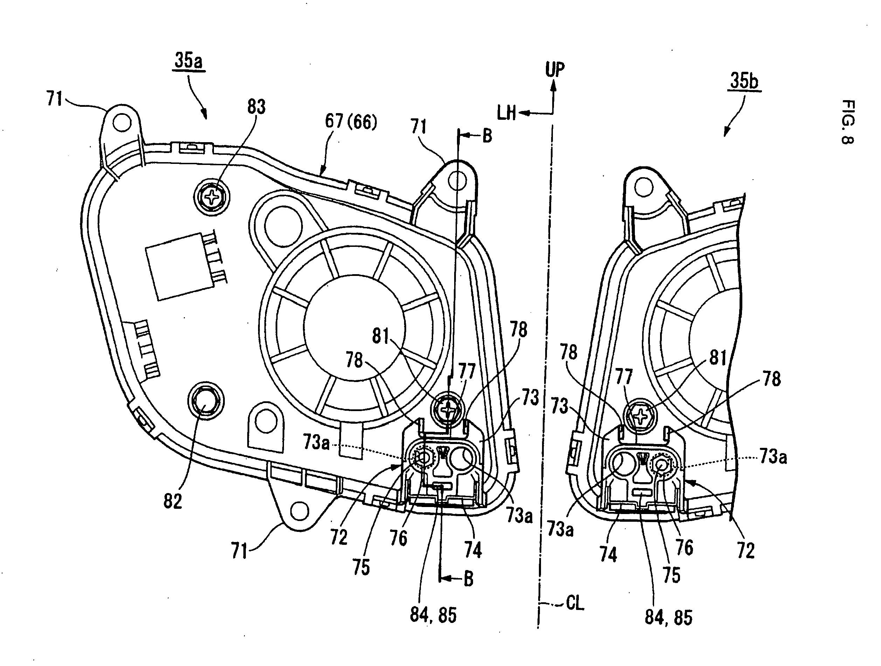

FIG. 8 is a rear elevational view of the headlamp.

### [FIG. 9]

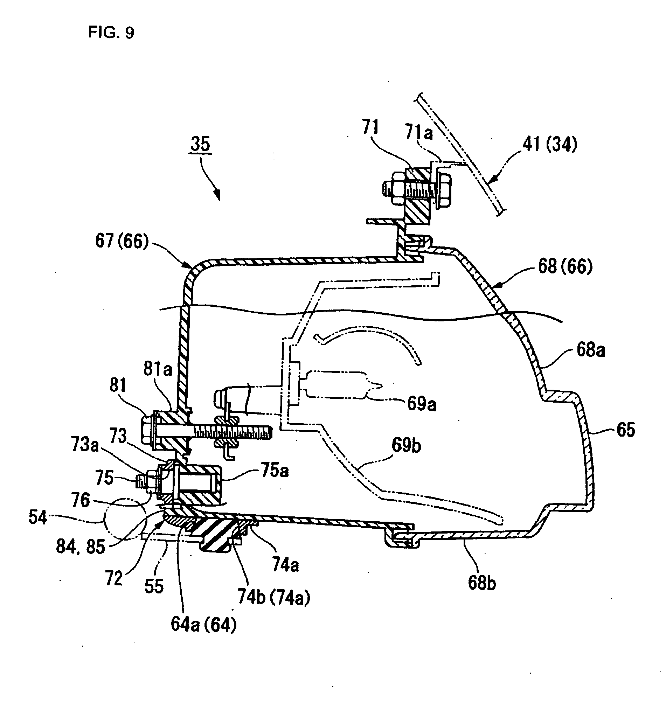

FIG. 9 is a sectional view taken along line B-B of FIG. 8.

### [FIG. 10]

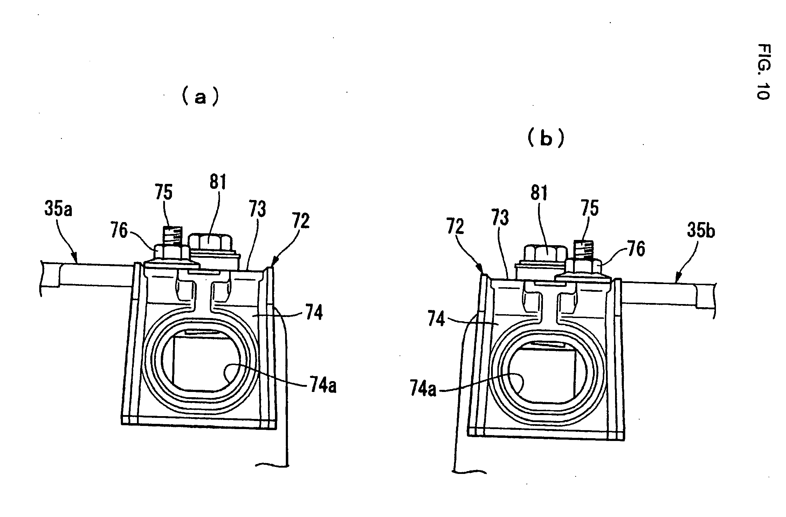

(a) of FIG. 10 is a bottom plan view of a stopper bracket attached to the left headlamp, and (b) of FIG. 10 is a bottom plan view of a stopper bracket attached to the right headlamp.

### [FIG. 11]

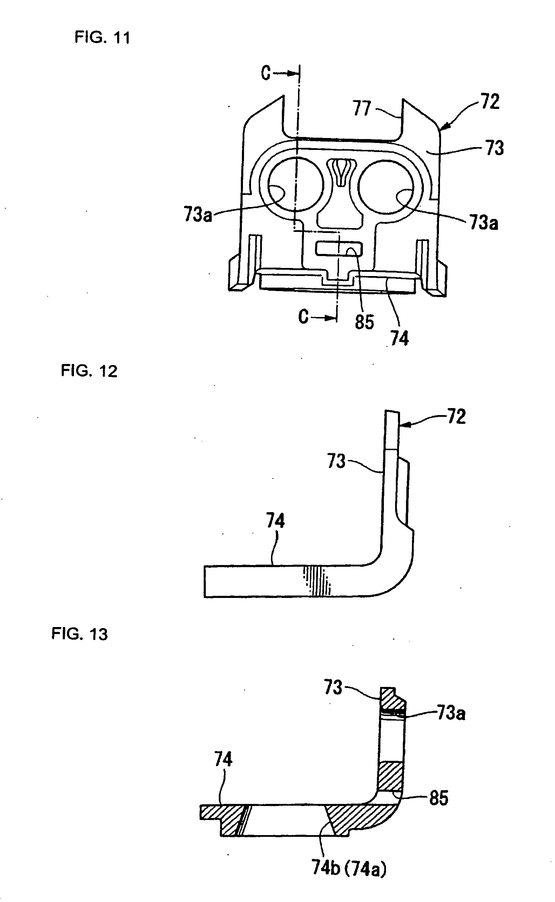

FIG. 11 is a rear elevational view of the stopper bracket.

### [FIG. 12]

FIG. 12 is a side elevational view of the stopper bracket.

### [FIG. 13]

FIG. 13 is a sectional view taken along line C-C of FIG. 11.

In the following, an embodiment of the present invention is described with reference to the drawings. It is to be noted that, unless otherwise specified, directions such as forward, rearward, leftward and rightward directions in the following description are same as those on a vehicle. Further, in the drawings, an arrow mark FR indicates the forward direction of the vehicle, an arrow mark LH indicates the leftward direction of the vehicle, and an arrow mark UP indicates an upward direction of the vehicle.

As shown in FIG. 1, a front wheel 2 of a motorcycle (saddle type vehicle) 1 is supported at a lower end portion of a pair of left and right front forks 3, and the front forks 3 is supported at an upper portion thereof for pivotal motion and for steering movement on a head pipe 6 of a vehicle body frame 5 through a steering stem 4. A bar handle 7 is attached to a top bridge 4a of the steering stem 4.

The vehicle body frame 5 is formed by integrally joining a plurality of kinds of steel stocks (or cast articles) by welding or the like, and is formed as that of a so-called mono-backbone type wherein a main frame 8 extending rearwardly from the upper portion of the head pipe 6 and extending downwardly in a curve is a principal member. The main frame 8 is disposed at the center in a vehicle widthwise direction (leftward and rightward direction) similarly to the head pipe 6.

From just rearwardly of the head pipe 6, a pair of left and right engine hangers 11 extend downwardly in an inclined relationship such that they are spaced away from each other.
A pair of left and right pivot brackets 12 are attached to the lower side of a rear portion of the main frame 8, and a seat rail 13 and a support pipe 13a for the seat rail 13 are attached at a front end portion thereof to the upper side of a rear portion of the main frame 8.

A swing arm 14 is supported at a front end portion thereof for pivotal rocking motion on the pivot brackets 12, and a rear wheel 15 is supported at a rear end portion of the swing arm 14. A rear cushion 16 is disposed between a front portion of the swing arm 14 and the curved portion of the main frame 8.

A parallel four-cylinder engine (internal combustion engine) 17 wherein a crank rotation axis extends in parallel to the vehicle widthwise direction is incorporated below the main frame 8. A cylinder block 19 is erected uprightly in an obliquely forwardly upward direction on a crankcase 18 of the engine 17. A throttle body 21 is connected to a rear portion of the cylinder block 19 for each cylinder, and an exhaust pipe 22 is connected to a front portion of the cylinder block 19 for each cylinder.

An air cleaner case 25 is connected to a rear portion of the throttle body 21. It is to be noted that, in FIG. 1, reference numeral 26 denotes an air intake duct disposed along a left side portion of the air cleaner case 25 and open rearwardly of the vehicle.

On the other hand, the exhaust pipes 22 are suitably curved in front of the engine 17 and extend below the crank case 18, and are jointed together to one pipe such that an exhaust catalyst and so forth are built therein. Further, the exhaust pipes 22 are connected to a silencer 23 on the right side of a rear portion of the vehicle body. A radiator 24 for engine cooling is disposed forwardly of the cylinder 19.

The upper side of a front portion of the crank case 18 is supported by a support plate 11a at a lower portion of the engine hangers 11, and the crank case 18 is supported at upper and lower portions of a rear portion thereof by upper and lower supporting sections 12a and 12b in the proximity of the pivot bracket 12, respectively.

Rotational driving force of the engine 17 is outputted to a driving sprocket wheel 29a on the left side of a rear portion of the crank case 18 through a clutch mechanism and a change gear not shown and then is transmitted to the rear wheel 15 through a driving chain 29b and a driven sprocket wheel 29c.

A fuel tank 31 is disposed above the engine 17 so as to extend across the main frame 8. A seat 32a for a driver and a seat 32b for a rear passenger which the seat rail 13 supports are disposed in a forwardly and rearwardly juxtaposed relationship rearwardly of the fuel tank 31. A front end portion of a step bracket 33 for supporting a step for a driver and a step for a rear passenger on the front and rear is attached on the rear portion of the pivot bracket 12.

Referring also to FIG. 2, a front cowl 34 for covering the head pipe 6 and the periphery of the head pipe 6 from forwardly to both left and right sides of the head pipe 6 is provided at a front portion of the vehicle body. The front cowl 34 is formed from synthetic resin and forms a forwardly downwardly inclined nose shape on the upper side of the front end portion of the vehicle body. The front cowl 34 is configured mainly from a front center cowl 41 which forms a leftwardly and rightwardly central portion on the upper side of the front end portion of the vehicle body and left and right front side cowls 45 which form left and right side portions of the front portion of the vehicle body. A front screen 39 formed from transparent or translucent synthetic resin is provided on the front side of the upper portion of the front center cowl 41. It is to be noted that, in FIG. 2, a line CL indicates a leftwardly and rightwardly center line of the vehicle body.

Left and right two-lamp type headlamps 35 are disposed at a front end portion of the front cowl 34. Front winkers 36 are disposed at an upper portion of the front edge inclined forwardly upwardly as viewed from the side at a lower extension 48 of the left and right front side cowls 45. A meter unit 37 having various indication elements is disposed on the inner side of an upper portion of the front cowl 34. A rearview mirror 38 is disposed on each of the left and right sides of an upper portion of the front cowl 34. In the following description, the headlamp 35 on the left side and the headlamp 35 on the right side are represented by reference symbol 35a and reference symbol 35b, respectively. Similarly, the front winker 36 on the left side and the front winker 36 on the right side are represented by reference symbol 36a and reference symbol 36b, respectively.

The front center cowl 41 integrally includes an outer face forming portion 42 extending upwardly so as to increase the leftward and rightward width toward the upper side from a gap portion between the left and right headlamps 35a and 35b and left and right covering portions 43 extending in a curve from the left and right sides of the outer face forming portion 42 to the obliquely rearwardly outer sides. The outer face forming portion 42 forms an appearance face curved in a convex shape toward the outer sides of the vehicle (obliquely upwardly forwardly) on the front face of the upper portion of the front cowl 34. The left and right covering portions 43 are formed in a frame shape in order that the lower portions of the left and right covering portions 43 allow lens faces 65 of the left and right headlamps 35a and 35b to face forwardly of the vehicle. The left and right covering portions 43 are covered with a front face portion 46 by overlapping with the front face portion 46 of the left and right front side cowls 45 from the obliquely forwardly outer side. It is to be noted that a slit hole 42a elongated upwardly and downwardly for allowing a supporting arm (not shown) of an adjuster unit for supporting the front screen 39 for adjustment of the height to extend therethrough is formed on the left and right sides of an upper portion of the outer face forming portion 42.

The left and right front side cowls 45 individually include a front face portion 46 provided so as to continue to the left or right outer side of the outer face forming portion 42 of the front center cowl 41, a rearwardly extending portion 47 extending rearwardly from an outer side edge of the front face portion 46 and a downwardly extending portion 48 extending downwardly from a lower edge of a forwardly and rearwardly intermediate portion of the rearwardly extending portion 47. A cutaway portion 46a which forms a substantially triangle shape whose outer side is inclined as viewed from the front side is formed individually on the left and right front face portions 46 so as to be aligned with an upper edge 65b and an outer side edge 65c of a lens face 65 which the left and right headlamps 35a and 35b individually include.

The rearwardly extending portion 47 extends rearwardly so as to cover an upper portion of the front fork 3 and a front portion of the fuel tank 31 from outwardly in the vehicle widthwise direction, and the downwardly extending portion 48 extends downwardly so as to cover the radiator 24 positioned rearwardly of a lower portion of the front fork 3 from outwardly in the vehicle widthwise direction.

A cowl extension 49 extending between the cutaway portions 46a is provided between lower portions of outer side edges of the cutaway portions 46a. A lower end of a leftwardly and rightwardly central portion of the front center cowl 41 is connected from upwardly to an upper face of a leftwardly and rightwardly central portion of the cowl extension 49. Both side ends at a leftwardly and rightwardly central lower end portion of the front center cowl 41 are aligned with inner side edges 65a of the lens faces 65 of the left and right headlamps 35a and 35b, and upper edges of left and right side portions of the cowl extension 49 are aligned with the lower edges 65d of the lens faces 65 of the left and right headlamp 35a and 35b. The front center cowl 41, cowl extension 49 and left and right front side cowls 45 cooperatively form openings 46b for exposing the lens faces 65 of the left and right headlamps 35a and 35b forwardly of the vehicle.

It is to be noted that a cowl side inner 49a which extends downwardly along a front edge of the downwardly extending portion 48 of the front side cowl 45 and functions also as a radiator shroud (baffles) is connected to both sides of a lower portion of the cowl extension 49.

Here, referring also to FIGS. 3 and 4, the front cowl 34 is supported at a front portion thereof on the head pipe 6 through a cowl stay 51 together with the headlamps 35, front winkers 36, rearview mirror 38 and meter unit 37, and the front cowl 34 is supported at the opposite left and right side portions thereof on the vehicle body frame 5 and so forth through a side frame not shown and so forth.

Referring to FIGS. 3 to 7, the cowl stay 51 is formed by integrally joining plural kinds of steel stocks by welding or the like and is configured mainly from a pair of left and right stay main bodies 52 formed by curving, for example, a cylindrical steel pipe into a crank shape as viewed from a side and the front. The left and right stay main bodies 52 have a left and right symmetric relationship with each other, and include stay lower portions 52a leftwardly and rightwardly adjacent to each other in front of the head pipe 6 and stay upper portions 52b spread obliquely to the leftwardly and rightwardly outer sides so as to be spaced away from each other above the stay lower portions 52a. The stay lower portions 52a of the left and right stay main bodies 52 are integrally joined with each other by welding or the like through a gusset plate 52c or the like. Thus, the cowl stay 51 having a substantially Y shape as viewed from the front is formed from the left and right stay main bodies 52.

Lower portions (left and right stay lower portions 52a) of the cowl stay 51 form a convex rearwardly curved shape as viewed from the side and a pair of left and right pivot plates 53 are connected to a rear end portion of the lower portions of the cowl stay 51. Further, in a state wherein a fastening portion 6a provided in a projecting manner at a front end portion of the head pipe 6 is sandwiched between the left and right pivot plates 53, the fastening portion 6a and the left and right pivot plates 53 are integrally fastened by a pair of upper and lower bolts or the like. As a result, the cowl stay 51 is fixed to a front end portion of the head pipe 6.

A lower cross pipe 54 formed from a cylindrical steel pipe having a substantially same diameter as that of the stay main body 52 is connected to a front end of a lower portion of the left and right stay lower portions 52a. The lower cross pipe 54 forms a linear shape and extends leftwardly and rightwardly, and left and right supporting pieces 55 extending forwardly and forming a plate shape substantially orthogonal to an upward and downward direction are connected at a rear end portion thereof individually to lower end portions of the opposite left and right sides of the lower cross pipe 54. It is to be noted that a vacuum tank bracket 56 for attaching a vacuum tank 91 which is an air intake system member of the engine 17 and a horn bracket for attaching a horn (warning horn) not shown are integrally connected in the proximity of a front end of a lower portion of the left and right stay lower portions 52a.

Upper portions (left and right stay upper portions 52b) of the cowl stay 51 form a forwardly convex curved shape as viewed from sidewardly, and the outer sides of an upper portion of the left and right stay upper portions 52b is curved upwardly so as to extend in parallel to each other as viewed from the front. Left and right mirror brackets 58 for attaching left and right mirrors are integrally connected to the outer sides of upper portions of the left and right stay upper portions 52b, respectively.

An upper cross pipe 59 formed from a cylindrical steel pipe having a diameter smaller than that of the stay main body 52 is provided between the outer sides of the upper portions of the left and right stay upper portions 52b. The upper cross pipe 59 extends leftwardly and rightwardly such that a shallow curved shape formed by curving left and right side portions of the upper cross pipe 59 a little to the obliquely upwardly outer sides as viewed from the front is formed, and a leftwardly and rightwardly intermediate portion of the upper cross pipe 59 is provided in a substantially parallel relationship to the leftward and rightward direction.

To a leftwardly and rightwardly intermediate portion of the upper cross pipe 59, a lower meter bracket 61 provided in an obliquely rearwardly downwardly projecting manner from a leftwardly and rightwardly central portion of the upper cross pipe 59 is integrally connected. Further, left and right upper meter brackets 62 provided in an upwardly projecting manner from left and right side portions are integrally connected to the leftwardly and rightwardly intermediate portion of the upper cross pipe 59.

Left and right screen brackets 63 individually formed by suitably curving a steel plate are provided between the left and right stay upper portion 52b and the left and right side portions of the upper cross pipe 59, and the left and right screen brackets 63 are integrally connected to each other over the left and right stay upper portion 52b and the left and right side portions of the upper cross pipe 59.

A pair of front and rear fastening holes of the left and right mirror brackets 58 are fastened and fixed by inserting a pair of front and rear threaded shafts (not shown) which extend through both left and right sides of an upper portion of the front cowl 34 in the left and right rearview mirrors 38.
Shaft-shaped boss (not shown) projecting from the rear face of the meter unit 37 are inserted in fastening holes of the meter brackets 61 and 62 of the upper cross pipe 59, and the meter brackets 61 and 62 are fastened and fixed by machine screws 61a and 62a.

An adjuster unit (not shown) capable of adjusting the height of the front screen 39 manually or electrically is fastened and fixed at left and right side portions thereof to the left and right screen brackets 63.
The left and right headlamps 35a and 35b are supported on the lower side of rear portions thereof on the inner sides in the vehicle widthwise direction on left and right supporting pieces 55 of the lower cross pipe 54 through elastic bodies 64 formed from synthetic rubber or the like.

The left and right headlamps 35a and 35b are disposed in a leftwardly and rightwardly distributed state sandwiching a vehicle central plane therebetween. The openings 46b for allowing the lens faces 65 of the left and right headlamps 35a and 35b to face forwardly of the vehicle are provided on the opposite sides of a front portion of the front cowl 34 (refer to FIG. 2), and the left and right headlamps 35a and 35b are supported on the front cowl 34 and the cowl stay 51 in a state wherein the lens faces 65 are exposed forwardly of the vehicle from the left and right openings 46b.

While the headlamps 35 are described below, unless otherwise specified, description is given referring to the left headlamp 35a, and it is assumed that the right headlamp 35b has a leftwardly and rightwardly symmetric configuration. Thus, description of the right headlamp 35b is omitted.

Referring to FIGS. 2 to 4, the lens face 65 of the headlamp 35 has a substantially quadrangular shape whose width is small in the upward and downward direction but is great in the leftward and rightward direction as viewed from the front and which is deformed so as to be inclined toward the outer side in the vehicle widthwise direction. The inner side edge 65a of the lens face 65 extends from a lower end of the lens face 65 toward the obliquely upwardly outer side and extends to an inner side end of the upper edge 65b of the lens face 65. The upper edge 65b extends from an inner side end thereof toward the obliquely upwardly outer side in a less steeply inclined relationship with respect to the inner side edge 65a and extends to an upper end of the outer side edge 65c of the lens face 65. The outer side edge 65c extends from an upper end thereof toward the obliquely downwardly inner side with an inclination equal to that of the inner side edge 65a and extends to an outer side end of the lower edge 65d of the lens 65. The lower edge 65d extends from an outer side end thereof toward the obliquely downwardly inner side in a substantially less steeply inclined relationship rather than the upper edge 65b and extends to a lower end of the inner side edge 65a. The opening 46b having the substantially same shape as that of the lens face 65 having such a shape as viewed from the front as described above is formed at a front portion of the front cowl 34.

Referring also to FIG. 9, the headlamp 35 forms an enclosed lamp case 66 (housing) formed principally from a box-shaped case main body 67 open forwardly of the vehicle and a lens body 68 attached so as to cover the opening of the case main body 67. A bulb 69a, a reflector 69b and so forth are accommodated in the lamp case 66 (in a lighting chamber). A plurality of fixing object portions 71 are provided in a projecting manner at an outer periphery portion of the lamp case 66, and the fixing object portions 71 are fastened and fixed to an outer peripheral fixing portion 71a of the opening 46b (lamp insertion portion) by machine screws or the like.

The lens body 68 of the headlamp 35 has a front wall 68a which forms a curved shape convex toward the obliquely forwardly outer side and extends along the front face of the front cowl 34, and an outer peripheral wall 68b extending rearwardly from an outer peripheral edge of the front wall 68a. The outer peripheral wall 68b is connected at a rear end edge thereof watertight to an opening peripheral edge of the case main body 67 thereby to form the integral lamp case 66. The front wall 68a of the lens body 68 is inclined so as to be positioned on the rear side toward the outer sides in the vehicle widthwise direction along the front face of the front cowl 34 as viewed from above. The lens face 65 which forms the shape as viewed from the front is swollen in the form of a step from the front face of the front wall 68a, and part of the front face (appearance face) of the front cowl 34 is formed from the lens face 65 having such a shape as described hereinabove as viewed from forwardly.

Here, the front cowl 34 is supported at a front portion thereof on the cowl stay 51 through the left and right headlamps 35a and 35b. In other words, the left and right headlamps 35a and 35b are supported by the front cowl 34 and the cowl stay 51. It is to be noted that the front cowl 34 are suitably supported at the opposite left and right side portions thereof on the vehicle body frame 5 or the like through a cowl side stay not shown or the like.

Further, as shown in FIGS. 8 and 9, left and right stopper brackets 72 for fitting with upper portions of the elastic body 64 engaged and held by tip end portions of the left and right supporting pieces 55 from downwardly are attached to angular portions on the lower side of a rear portion of the inner sides in the vehicle widthwise direction of the left and right headlamps 35a and 35b (left and right lamp cases 66). The left and right stopper brackets 72 have configurations same as each other and are used commonly for the left and right headlamps 35a and 35b, and are sufficiently small parts with respect to the left and right lamp cases 66.

Description of the stopper brackets 72 is given below referring to the stopper bracket 72 in a attached state to the left side headlamp 35.
Referring also to FIGS. 10 to 13, the stopper bracket 72 is configured, for example, from synthetic resin, and is provided in an L shape as viewed from sidewardly so as to extend along an angular portion on the lower side of a rear portion of the lamp case 66. In particular, the stopper bracket 72 integrally includes a vertical wall portion 73 extending along a rear wall substantially orthogonal to the forward and rearward direction in the lamp case 66 and a horizontal wall portion 74 extending along a lower wall substantially orthogonal to the upward and downward direction in the lamp case 66. A pair of left and right attaching holes 73a to the rear wall of the lamp case 66 are provided in the vertical wall portion 73 of the stopper bracket 72, and an engaging hole 74a for fitting with an upper portion of the elastic body 64 is provided in the horizontal wall portion 74 of the stopper bracket 72. Here, the stopper bracket 72 has a symmetrical configuration with respect to a leftwardly and rightwardly central line of the stopper bracket 72.

Referring to FIGS. 8 and 9, by inserting a threaded stem of a stud bolt 75 provided in a rearwardly projecting manner on the rear wall of the lamp case 66, for example, into the attaching hole 73a on the outer side in the vehicle widthwise direction and screwing and tightening a nut 76 on the threaded stem from rearwardly, the stopper bracket 72 is fixed integrally to an angular portion on the lower side of a rear portion of the lamp case 66 in a state wherein the vertical wall contacts with the rear wall of the lamp case 66 from rearwardly and the horizontal wall portion 74 contacts with the lower wall of the lamp case 66 from downwardly. It is to be noted that (a) of FIG. 10 shows the stopper bracket in a state wherein it is attached to the left headlamp 35 and (b) of FIG. 10 shows the stopper bracket 72 in another state wherein it is attached to the right headlamp 35.

A cutaway concave portion 77 of a substantially U shape as viewed from the rear which is open upwardly is formed at an upper end portion of the vertical wall portion 73 of the stopper bracket 72. On the other hand, a pair of left and right detent pieces 78 contacting and engaging with left and right inner side edges of the cutaway concave portion 77 are provided in a projecting manner on the rear wall of the lamp case 66. By the engagement of the left and right projections and the cutaway concave portion 77, positioning in the leftward and rightward direction of the stopper bracket 72 and detention upon fastening of the nut 76 are achieved. It is to be noted that, also by contacting the horizontal wall portion 74 of the stopper with the lower wall of the lamp case 66, detection upon fastening of the stopper bracket 72 is achieved and positioning in the upward and downward direction of the stopper bracket 72 is carried out.

A head portion of an aiming bolt 81 extending through the rear wall of the lamp case 66 and screwed in the reflector 69b is positioned above the cutaway concave portion 77. In other words, the stopper bracket 72 is attached below the aiming bolt 81 disposed at a lower portion on the inner side in the vehicle widthwise direction of the rear wall of the lamp case 66. A boss portion 75a for implanting of the stud bolt 75 in the rear wall is provided in an offset relationship on the outer side in the vehicle widthwise direction with respect to the boss portion 81a for insertion of the aiming bolt 81 in the rear wall. A lower end portion of a head portion of the aiming bolt 81 is provided so as to enter in the cutaway concave portion 77 as viewed from the rear.

It is to be noted that, in FIG. 8, reference numeral 82 denotes a pivot bolt inserted in a lower portion on the outer side in the vehicle widthwise direction of the rear wall of the lamp case 66 and supporting the reflector 69b for tilting motion. The aiming bolt 81 tilts the reflector 69b principally in the leftward and rightward direction in accordance with the tightening amount. Further, an aiming bolt 83 disposed at an upper portion on the outer side in the vehicle widthwise direction of the rear wall of the lamp case 66 tilts the reflector 69b principally in the upward and downward direction in accordance with the tightening amount.

Referring also to FIG. 13, a center engagement hole 85 for allowing a positioning piece 84 provided in a projecting manner at a lower end portion on the inner side in the vehicle widthwise direction of the rear wall of the lamp case 66 to be inserted therein and engaged therewith is provided at a leftwardly and rightwardly central portion of the vertical wall portion 73 of the stopper bracket 72 below the attaching holes 73a.
Further, referring also to FIG. 10, the engagement hole 74a which forms an elliptical shape elongated leftwardly and rightwardly as viewed from below is provided at a leftwardly and rightwardly central portion of the horizontal wall portion 74 of the stopper bracket 72.

The engagement hole 74a has a tapering inner peripheral face 74b spread toward the lower side within the range of the upward and downward thickness of the horizontal wall portion 74. On the other hand, an outer peripheral face 64a of an upper portion of the elastic body 64 is provided in a tapering shape so as to be aligned with the inner peripheral face 74b of the engagement hole 74a. Consequently, positioning when the elastic body 64 (and the cowl stay 51 to which the elastic body 64 is attached) is fitted with the stopper bracket 72 (and the headlamp 35 on which the stopper bracket 72 is attached) is facilitated, and, since the taper faces contact with each other, positioning of the headlamp 35 is carried out with high accuracy.

It is to be noted that the vacuum tank 91 attached to the vacuum tank bracket 56 of the cowl stay 51 is communicated with a suction chamber of a negative pressure type diaphragm for operating a valve (not shown) provided in the suction duct 26 in response to a driving situation of the engine 17 (both of the diaphragm and the suction chamber are not shown). Then, in response to a suction negative pressure or the like which acts upon a negative pressure chamber in the suction chamber, the valve in the suction duct 26 is operated to open and close a suction path to the air cleaner case 25. By disposing such function parts as described above in a space between the left and right headlamps 35a and 35b which is likely to make a dead space, various parts can be disposed efficiently in the motorcycle 1 which has much constraint in the part disposition space.

As described above, in the headlamp supporting structure for a saddle type vehicle according to the embodiment described above which is applied to the motorcycle 1 wherein the front cowl 34 is attached to the cowl stay 51 and the headlamp 35 is supported on the front cowl 34 and the cowl stay 51, the headlamp 35 is attached at an outer periphery thereof to the front cowl 34 and the stopper bracket 72 is attached to a lower portion of the headlamp 35, and the elastic body 64 fitted with the stopper bracket 72 is attached to the cowl stay 51 and the headlamp 35 is elastically supported at a lower portion thereof on the cowl stay 51 through the elastic body 64.
With the configuration just described, since the headlamp 35 can be supported only by attaching the stopper bracket 72 to the existing headlamp 35 without providing a supporting projection depending upon the cowl stay 51 on the headlamp 35, also upon changing the headlamp 35, the headlamp 35 and the cowl stay 51 can be diverted only by minor change thereof. Thus, reduction of the cost can be anticipated.

Further, in the headlamp supporting structure, the stopper bracket 72 is formed in a substantially L shape as viewed from sidewardly and is provided so as to extend along an angular portion on the lower side of a rear portion of the lamp case 66 of the headlamp 35.
With the configuration just described, positioning of the stopper bracket 72 is facilitated and can be fixed in stability in a state wherein it contacts with the rear face and the lower face of the lamp case 66.

Further, in the headlamp supporting structure, the stopper bracket 72 is attached at an upper portion thereof to the lamp case 66 of the headlamp 35 and the engagement hole 74a for engaging with the elastic body 64 is provided at a lower portion of the stopper bracket 72.
With the configuration just described, the elastic body 64 can be fitted with the stopper bracket 72 such that the lamp case 66 is placed on the elastic body 64, and positioning and attachment and detachment of the headlamp 35 can be facilitated.

Further, in the headlamp supporting structure, the paired left and right headlamps 35 are provided and the stopper bracket 72 is attached to a lower portion on the inner side in the vehicle widthwise direction of the lamp case 66 of the left and right headlamps 35a and 35b.
With the configuration just described, the paired left and right headlamps 35 can be supported in stability with good balance.

Further, in the headlamp supporting structure, the paired left and right attaching holes 73a to the lamp case 66 of the headlamp 35 are provided on the stopper bracket 72, and the cutaway concave portion 77 of a substantially U shape is provided above the left and right attaching holes 73a and the aiming bolt 81 is disposed above the cutaway concave portion 77.
With the configuration just described, the stopper bracket 72 can be attached to the lower side at a rear portion of the lamp case 66 in a state wherein the cutaway concave portion 77 is utilized for engagement with a detent for the stopper bracket 72 while avoiding the aiming bolt 81 disposed normally at a corner portion of a rear portion of the lamp case 66 by means of the cutaway concave portion 77.

Further, in the headlamp supporting structure, the detent piece 78 for engaging with the inner side of the cutaway concave portion 77 is provided on the lamp case 66.
With the configuration just described, attachment of the stopper bracket 72 is facilitated and interference with the aiming bolt 81 can be prevented.

Further, in the headlamp supporting structure, the lower cross pipe 54 extending leftwardly and rightwardly is provided at a lower portion of the cowl stay 51 and the elastic body 64 is supported on the supporting piece 55 extending forwardly from the lower cross pipe 54.
With the configuration just described, simplification of the supporting structure of the headlamp 35 can be anticipated.

Further, in the headlamp supporting structure, the vacuum tank 91 communicated with the negative pressure chamber of the negative pressure type diaphragm for opening and closing the suction path of the air cleaner case 25 of the engine 17 is provided between the left and right headlamps 35a and 35b in the proximity of the lower cross pipe 54.
With the configuration just described, a dead space between the left and right headlamps 35a and 35b can be effectively utilized as a disposition space for the vacuum tank 91 and the degree of freedom in disposition of the peripheral parts can be increased.

It is to be noted that the configuration of the embodiment described above is an example of the present invention, and can be applied not only to a motorcycle but also to a three-wheel or four-wheel vehicle and, it is a matter of course that various changes can be made to the configuration without departing from the subject matter of the present invention.

### [Description of Reference Symbols]

- 1:: Motorcycle (Saddle type vehicle)
- 17:: Engine
- 25:: Air cleaner case
- 34:: Front cowl
- 35:: Headlamp
- 35a:: Left headlamp
- 35b:: Right headlamp
- 51:: Cowl stay
- 54:: Lower cross pipe (Cross pipe)
- 55:: Supporting piece (Stay)
- 64:: Elastic body
- 66:: Lamp case
- 72:: Stopper bracket
- 73a:: Attaching hole
- 74a:: Engagement hole (Opening)
- 77:: Cutaway concave portion (Concave portion)
- 78:: Detent piece (Detent)
- 81:: Aiming bolt
- 91:: Vacuum tank

## Claims

1. A headlamp supporting structure for a saddle type vehicle, in which a front cowl (34) is mounted on a cowl stay (51) and a headlamp (35) is supported on said front cowl (34) and said cowl stay (51),
an outer periphery of said headlamp (35) being mounted on said front cowl (34) **characterized in that** a stopper bracket (72) is mounted at a lower portion of said headlamp (35), and an elastic body (64) fitted with said stopper bracket (72) is mounted on said cowl stay (51) and said headlamp (35) is elastically supported at the lower portion thereof by said cowl stay (51) through said elastic body (64).

2. The headlamp supporting structure for a saddle type vehicle according to claim 1, **characterized in that** said stopper bracket (72) is formed in a substantially L shape as viewed in side elevation and said stopper bracket (72) is provided so as to extend along an angular portion on the lower side of a rear portion of a lamp case (66) of said headlamp (35).

3. The headlamp supporting structure for a saddle type vehicle according to claim 1 or 2, **characterized in that** said stopper bracket (72) is mounted at an upper portion thereof on a lamp case (66) of said headlamp (35), and an opening (74a) for engaging with said elastic body (64) is provided at a lower portion of said stopper bracket (72).

4. The headlamp supporting structure for a saddle type vehicle according to any one of claims 1 to 3, **characterized in that** a pair of such left and right headlamps (35) are provided, and said stopper bracket (72) is mounted at a lower portion on the inner side in a vehicle widthwise direction of said lamp case (66) of said left and right headlamps (35a, 35b).

5. The headlamp supporting structure for a saddle type vehicle according to any one of claims 1 to 4, **characterized in that** a pair of left and right mounting holes (73a) of said headlamp (35) on said lamp case (66) are provided on said stopper bracket (72), and a concave portion (77) of a substantially U shape is provided above said left and right mounting holes (73a) and an aiming bolt (81) is disposed above said concave portion (77).

6. The headlamp supporting structure for a saddle type vehicle according to any of the preceding claims, **characterized in that** a detent (78) for engaging with the inner side of said concave portion (77) is provided on said lamp case (66).

7. The headlamp supporting structure for a saddle type vehicle according to any one of claims 1 to 6, **characterized in that** a cross pipe (54) extending leftward and rightward direction is provided at a lower portion of said cowl stay (51), and said elastic body (64) is supported on a stay (55) extending forwardly from said cross pipe (54).

8. The headlamp supporting structure for a saddle type vehicle according to any of the preceding claims, **characterized in that** a vacuum tank (91) communicating with a negative pressure chamber of a negative pressure type diaphragm for opening and closing an air intake path of an air cleaner case (25) of an engine (17) is provided between the left and right headlamps (35a, 35b) and in the proximity of said cross pipe (54).

## Patentansprüche

1. Scheinwerferhaltestruktur für ein Sattelfahrzeug, wobei eine Frontverkleidung (34) auf eine Verkleidungsverankerung (51) montiert ist und ein Scheinwerfer (35) auf der Frontverkleidung (34) und der Verkleidungsverankerung (51) gehalten wird,
wobei ein Außenumfang des Scheinwerfers (35) auf der Frontverkleidung (34) montiert ist, **dadurch gekennzeichnet, dass** eine Anschlaghalterung (72) an einem unteren Abschnitt des Scheinwerfers (35) montiert ist, und ein elastischer Körper (64), der mit der Anschlaghalterung (72) versehen ist, auf der Verkleidungsverankerung (51) montiert ist und der Scheinwerfer (35) von der Verkleidungsverankerung (51) durch den elastischen Körper (64) elastisch in ihrem unteren Abschnitt gehalten wird.

2. Scheinwerferhaltestruktur für ein Sattelfahrzeug nach Anspruch 1, **dadurch gekennzeichnet, dass** die Anschlaghalterung (72) in einer rechten Seitenrissansicht im Wesentlichen in einer L-Form ausgebildet ist und die Anschlaghalterung (72) derart bereitgestellt ist, dass sie sich entlang eines winkeligen Abschnitts der Unterseite eines hinteren Abschnitts eines Lampengehäuses (66) des Scheinwerfers (35) erstreckt.

3. Scheinwerferhaltestruktur für ein Sattelfahrzeug nach Anspruch 1 oder Anspruch 2,
**dadurch gekennzeichnet, dass** die Anschlaghalterung (72) in ihrem oberen Abschnitt auf einem Lampengehäuse (66) des Scheinwerfers (35) montiert ist, und eine Öffnung (74a) zum Eingreifen mit dem elastischen Körper (64) in einem unteren Abschnitt der Anschlaghalterung (72) bereitgestellt ist.

4. Scheinwerferhaltestruktur für ein Sattelfahrzeug nach einem der Ansprüche 1 bis 3,
**dadurch gekennzeichnet, dass** ein Paar derartiger linker und rechter Scheinwerfer (35) bereitgestellt ist, und die Anschlaghalterung (72) in einer Fahrzeugbreitenrichtung des Lampengehäuses (66) der linken und rechten Scheinwerfer (35a, 35b) an einem unteren Abschnitt auf der Innenseite montiert ist.

5. Scheinwerferhaltestruktur für ein Sattelfahrzeug nach einem der Ansprüche 1 bis 4, **dadurch gekennzeichnet, dass** ein Paar linker und rechter Montagelöcher (73a) des Scheinwerfers (35) auf dem Lampengehäuse (66) auf der Anschlaghalterung (72) bereitgestellt ist, und ein konkaver Abschnitt (77) mit im Wesentlichen einer U-Form über den linken und rechten Montagelöchern (73a) bereitgestellt ist und ein Einstellbolzen (81) über dem konkaven Abschnitt (77) bereitgestellt ist.

6. Scheinwerferhaltestruktur für ein Sattelfahrzeug nach einem der vorhergehenden Ansprüche, **dadurch gekennzeichnet, dass** eine Arretierung (78) zum Eingreifen mit der Innenseite des konkaven Abschnitt (77) auf dem Lampengehäuse (66) bereitgestellt ist.

7. Scheinwerferhaltestruktur für ein Sattelfahrzeug nach einem der Ansprüche 1 bis 6, **dadurch gekennzeichnet, dass** ein Querrohr (54), das sich in die linke und rechte Richtung erstreckt, an einem unteren Abschnitt der Verkleidungsverankerung (51) bereitgestellt ist, und der elastische Körper (64) auf einer Verankerung (55), die sich von dem Querrohr (54) nach vom erstreckt, gehalten wird.

8. Scheinwerferhaltestruktur für ein Sattelfahrzeug nach einem der vorhergehenden Ansprüche, **dadurch gekennzeichnet, dass** ein Unterdruckbehälter (91), der mit einer Unterdruckkammer mit einer Membran vom Unterdrucktyp zum Öffnen und Schließen eines Luftansaugwegs eines Luftfiltergehäuses (25) eines Motors (17) in Verbindung steht, zwischen den linken und rechten Scheinwerfern (35a, 35b) und in unmittelbarer Nähe des Querrohrs (54) bereitgestellt ist.

## Revendications

1. Structure de support de phare pour un véhicule du type à selle, dans laquelle un capot de protection avant (34) est monté sur un support de capot de protection (51) et un phare (35) est supporté sur ledit capot de protection avant (34) et ledit support de capot de protection (51),
une périphérie extérieure dudit phare (35) étant montée sur ledit capot de protection avant (34),
**caractérisée en ce qu'**un support d'arrêt (72) est monté au niveau d'une partie inférieure dudit phare (35), et un corps élastique (64) équipé dudit support d'arrêt (72) est monté sur ledit support de capot de protection (51) et ledit phare (35) est supporté de manière élastique au niveau de sa partie inférieure par ledit support de capot de protection (51) par l'intermédiaire dudit corps élastique (64).

2. Structure de support de phare pour un véhicule du type à selle selon la revendication 1, **caractérisée en ce que** ledit support d'arrêt (72) est réalisé en une forme sensiblement en L tel que vu en élévation latérale et ledit support d'arrêt (72) est prévu de manière à s'étendre le long d'une partie angulaire du côté inférieur d'une partie arrière d'un carter de phare (66) dudit phare (35).

3. Structure de support de phare pour un véhicule du type à selle selon la revendication 1 ou 2, **caractérisée en ce que** le support d'arrêt (72) est monté au niveau d'une partie supérieure de celui-ci sur un carter de phare (66) dudit phare (35), et une ouverture (74a) pour venir en prise avec ledit corps élastique (64) est prévue au niveau d'une partie inférieure dudit support d'arrêt (72).

4. Structure de support de phare pour un véhicule du type à selle selon l'une quelconque des revendications 1 à 3, **caractérisée en ce qu'**une paire de tels phares (35) gauche et droit est prévue, et ledit support d'arrêt (72) est monté au niveau d'une partie inférieure sur le côté intérieur dans une direction de largeur de véhicule dudit carter de phare (66) desdits phares gauche et droit (35a, 35b).

5. Structure de support de phare pour un véhicule du type à selle selon l'une quelconque des revendications 1 à 4, **caractérisée en ce qu'**une paire de trous de montage (73a) gauche et droit dudit phare (35) sur ledit carter de phare (66) sont prévus sur ledit support d'arrêt (72), et une partie concave (77) d'une forme sensiblement en U est prévue au-dessus desdits trous de montage (73a) gauche et droit et un boulon de visée (81) est disposé au-dessus de ladite partie concave (77).

6. Structure de support de phare pour un véhicule du type à selle selon l'une quelconque des revendications précédentes, **caractérisée en ce qu'**un cliquet (78) pour venir en prise avec le côté intérieur de ladite partie concave (77) est prévu sur ledit carter de phare (66).

7. Structure de support de phare pour un véhicule du type à selle selon l'une quelconque des revendications 1 à 6, **caractérisée en ce qu'**un tube transversal (54) s'étendant dans les directions gauche et droite est prévu au niveau d'une partie inférieure dudit support de capot de protection (51), et ledit corps élastique (64) est supporté sur un support (55) s'étendant vers l'avant dudit tube transversal (54).

8. Structure de support de phare pour un véhicule du type à selle selon l'une quelconque des revendications précédentes, **caractérisée en ce qu'**un réservoir sous vide (91) communiquant avec une chambre de pression négative d'une membrane du type à pression négative pour ouvrir et fermer un trajet d'admission d'air d'un carter de filtre à air (25) d'un moteur (17) est prévu entre les phares gauche et droit (35a, 35b) et dans le voisinage dudit tube transversal (54).
